Europäisches Patentamt

European Patent Office

Office européen des brevets

(19)

(11) Publication number: **0 252 659 B1**

# EUROPEAN PATENT SPECIFICATION

(45) Date of publication of patent specification: **28.08.91**     (51) Int. Cl.⁵: **B60R   13/06**

(21) Application number: **87305714.5**

(22) Date of filing: **26.06.87**

(54) A core for a strip structure.

(30) Priority: **26.06.86 GB 8615680**

(43) Date of publication of application:
**13.01.88 Bulletin  88/02**

(45) Publication of the grant of the patent:
**28.08.91 Bulletin  91/35**

(84) Designated Contracting States:
**BE DE ES FR GB IT SE**

(56) References cited:
**EP-A- 0 124 671
DE-A- 1 430 614
GB-A- 2 028 407
US-A- 2 290 842**

**PATENT ABSTRACTS OF JAPAN, vol. 10, no.
73 (M-463)[2130], 22nd March 1986; & JP-A-60
215 447 (TOYODA GOSEI K.K.) 28-10-1985**

(73) Proprietor: **SILENT CHANNEL PRODUCTS
LIMITED
Dryden House St. John's Street
Huntingdon Cambridgeshire PE18 6DD(GB)**

(72) Inventor: **Pike, Harold William Edward
Elm Lee Conington
Nr. Elsworth Cambridgeshire(GB)**

(74) Representative: **Jones, Michael Raymond et al
HASELTINE LAKE & CO. Hazlitt House 28
Southampton Buildings Chancery Lane
London WC2A 1AT(GB)**

## Description

This invention relates to a core, sometimes known as a carrier, for a strip structure and is more particularly, but not exclusively, concerned with a metal core for strip structures such as flange finishers, door seal products and flocked rubber sealing strips.

At present, the metal core for a strip structure is formed by taking an elongate rectangular strip of metal, usually steel, and subjecting that elongate metal strip to one of two processes. In one process, side slots are punched or pressed out of the strip thereby to create a ribbed structure having a continuous central spine. This process suffers from the disadvantage that the punch wears and eventually breaks. Moreover, a portion of metal is inevitably lost from the strip. In an alternative, second process, the metal strip is lanced across a portion of its width. The lanced cuts in the metal extend inwardly from each lateral edge of the strip, the cuts ending short of a central region of the strip in order to leave a continuous central spine to the strip. The elongate strip, bearing the cuts, is then longitudinally stretched so that the cuts open up to yield a series of slots on either side of the central spine. This technique suffers from the disadvantage that the central spine, on stretching, becomes thinned relative to the ribs of the strip and the structure is inherently weakened. A serious loss of clamping may be experienced, because of this thinning, when the profile is formed into a "U" section.

British Patent No. 1492061 relates to a reinforcing carrier for a flexible channel-shaped sealing, finishing or guide strip, comprising a series of U-form elements arranged side-by-side to define a channel, the legs of the elements being substantially straight and adjacent legs of adjacent elements being interconnected by means of short connecting links each of which extends from a point on a leg of one element to a point on the corresponding leg of the adjacent element, the two said points being at different distances from the base of the said channel and at each such point there being substantially the same flexibility between the elements and the connecting links.

The strip has been found not to possess the necessary characteristics for enabling strip structures, which have the desirable bending and gripping qualities which are required on modern automobiles, to be produced. According to the preamble of claims 1 and 7 EP-A-0124671, US-A-2290842 and DE-A-1430614 each relate to a metal stiffening core for a sealing section and a method of producing the core, primarily for use in motor and similar vehicles. The cores described, when flat before bending into a channel, each include a series of elongate hexagonal apertures. It has been found that channel structures of the general form shown and described in EP-A-0124671, US-A-2290842 and DE-A-1430614 do not possess adequate lateral flexibility, i.e., the structures do not easily bend out of a plane parallel to the plane of a channel side wall. The cores described in each of the three documents include a central aperture which extends across at least about 70% of the width of the core. Thus, the central region of each of these prior art cores comprises a series of parallel metal bands, the only strengthening to the core being close to the extremities of the walls of the core.

According to a first aspect of the present invention there is provided an elongate, laminar blank intended to be formed into an elongate channel-shaped core for a strip structure comprising a central spine region extending along the length of the blank and, to each side of the central region, a side region comprising a regular series of alternate legs and slots each leg extending generally perpendicularly to the length of the blank in a direction outwardly from the central region to a lateral edge of the blank and each leg on one of said sides being aligned across the width of the blank with a leg on the other of said sides to form a pair of aligned legs each slot extending from a respective apex in the central region outwardly to its respective lateral edge and each slot on one of said sides being aligned across the width of the blank with a slot on the other of said sides to form a pair of aligned slots; and the central region being provided with a plurality of evenly spaced apertures each of which extends in a direction generally perpendicular to the length of the blank with the centreline of a pair of aligned legs; characterised in that the length, when measured in a direction generally perpendicular to the length of the blank, of each aperture is no greater than 50% of the total width of the blank and in that the ratio of the length of each aperture to the distance between respective apices of an aligned pair of slots adjacent to the aperture is in the range of from 1.5:1 to 6:1.

The blank is preferably made using a lancing method which forms a second aspect of this invention. Thus, according to a second aspect of this invention, there is provided a method of producing an elongate blank, which method comprises forming, in an elongate metal strip of substantially constant width, a first series of regular, spaced-apart cuts extending normally from each lateral edge of the metal strip, each terminating at an apex outwardly within an intermediate region of the strip, each cut from one lateral edge of the metal strip being co-linear with a cut from the other lateral edge of the strip to form a pair of aligned cuts; forming a second series of cuts, parallel to the first series of cuts, and spaced equally or substantially equal between cuts of the first series of cuts, and second series of cuts extending across the intermediate region of the strip and terminating short of the lateral edges of the strip but overlapping adjacent cuts of the first series of cuts; and longitudinally stretching the strip so as to open the cuts thereby to form an elongate carrier blank; characterised in that the length, when measured in a direction generally perpendicular to the length of the blank, of each of the second cuts is no greater than 50% of the length of the blank and in that the ratio of the width of each of the second cuts to the distance between the apices of an adjacent aligned pair of first cuts is in the range of from 1.5:1 to 6:1.

It is to be appreciated that the blank of the first aspect of this invention could be formed using a conventional punching technique.

Normally, the apertures in the central region of the core will extend across the base of the channel-shaped core, when the core has been folded to its desired channel-shaped configuration, with the ends of each aperture terminating the region of the junction between the base of and a side wall. However, it is presently considered possible that, with a channel having a very narrow base, that apertures may extend somewhat into the channel side walls. Nevertheless, the apertures will have a maximum width of 50% of the overall width of the blank and, as such, even with a channel having a narrow base and apertures of the maximum width possible, the linking parts between adjacent subunits of the channel will still be disposed in the upper part of the side walls toward the base of the channel, rather than toward the extremities of the side walls.

The width of each aperture is preferably no less than 20% of the total width of the blank, more preferably in the range of from 25% to 40% of the width of the blank, most preferably about 30% of the width of the blank.

The ratio of the width of each aperture to the distance between the apices of an aligned pair of slots adjacent to the aperture of an aligned pair in the range of from 2:1 to 4:1 and is most preferable about 3:1.

The blank of the present invention, when formed by a stretching technique, does not suffer from the disadvantages of stretched prior art cores. Firstly, the draw-back of high punch wear/breakage is not encountered. In addition, the central spine is not thinned during stretching and the blank is therefore capable of being formed into a channel for a strip structure which does not suffer from a loss of clamping effect. It is envisaged that, using the stretching technique, a strip length gain of about 20% can be achieved. This ensures sufficient interstices to permit the plastics material of the strip structure to key together through the steel core during extrusion whilst at the same time allowing full flexibility of the strip structure.

According to a third aspect of the present invention, there is provided a flexible channel-shaped strip structure incorporating a channel-shaped core made from an elongate blank in accordance with the first aspect of the present invention.

In a fourth embodiment of the present invention, there is provided a method of making a strip structure incorporating a channel-shaped carrier, which method comprises forming an elongate carrier blank by a method according to the second aspect of the present invention; covering the channel-shaped carrier with a flexible resilient material to enclose the carrier; and before or after the carrier is covered, forming the carrier blank into a channel shape.

The blank of the present invention may be used to form the extended core for more complicated strip structures which include a channel in combination with another feature such as a lip or an additional channel, inverted in relation to the first channel.

Preferably, the flexible resilient material is a plastics material and the strip structure is formed by extrusion. However, other materials, such as conventional rubber materials, may be used as the resilient flexible material.

For a better understanding of the present invention and to show how the same may be carried into effect, reference will now be made, by way of example only, to the accompanying drawings in which:

Figure 1 shows one embodiment of an elongate carrier blank according to one aspect of the present invention;

Figure 2 shows a metal blank of Figure 1 formed into a channel-shaped core;

Figure 3 shows a metal strip like that of Figure 1 having been lanced but before stretching; and

Figure 4 shows a strip structure incorporating a metal core according to the present invention.

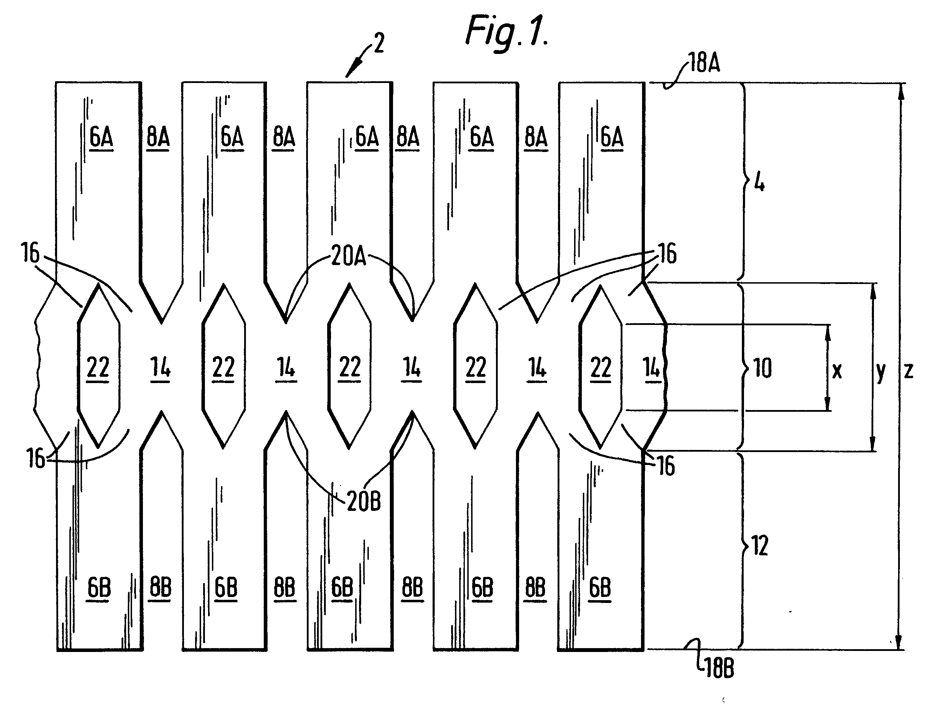

Referring firstly to Figure 1, a core blank 2 is made from a metal, preferably steel. Only a short length of the elongate core blank 2 is shown. The core has three separate regions: a first region 4 comprising a regular series of alternate legs 6A and spaces 8A; a second, intermediate region or spine region 10; and a third region 12, being a mirror image of the first region 4 and comprising a regular series of alternate legs 6B and spaces 8B. The spine region 10 comprises a plurality of regularly spaced-apart elements 14. Each of these elements 14 is connected, by means of short connecting links 16 to four legs 6A, 6B (two legs 6A on one side and two legs 6B on the other side of the spine 10). The elements 14 are separated by regularly spaced, gnerally hexagonalapertures 22. The perpendicular distance from a lateral edge 18A, 18B of the blank 2 to the position at which a connecting link 16 is joined to each leg 6A, 6B is the same for each leg 6A, 6B in the embodiment shown. However, the legs may be longer to one side of the blank than the other giving an offset structure.

The spaces 8A on one side of the blank are in registry with the spaces 8B on the other side of the blank. The apertures 22 between the elements 14 of the spine 10 are aligned with the centre line between the aligned pair of legs 6A, 6B.

Each of the spaces 8A, 8B terminates at an apex 20A, 20B within the spine region 10 of the blank 2. The distance between the apices of a pair of spaces 8A, 8B aligned across the blank 2 is x. Each of the apertures 22 is generally hexagonal, having a length from apex to apex across the width of the blank of y, which is much greater than its width (in the longitudinal direction of the blank 2). The overall width of the blank is z. For the present invention, the length of each aperture y must be no greater than 50% of the overall width of the blank z. Most preferably, the length of the aperture y is about one third the width of the blank. In a typical embodiment y is about 9mm and z is about 32mm.

The ratio of y to the distance x between the apices of a pair of spaces 8A, 8B aligned across the blank is critical and must be in the range of from 1.5:1 to 6:1. Preferably, the ratio is about 3:1. In a typical embodiment x is about 3mm giving a y:x ratio of about 3:1.

The blank has a high degree of symmetry. Firstly, it is symmetrical about a longitudinal axis running centrally of the blank 2. Moreover, it is also symmetrical about a transverse line drawn centrally of a pair of aligned legs 6A, 6B or a transverse drawn centrally of an element 14 of the spine 10.

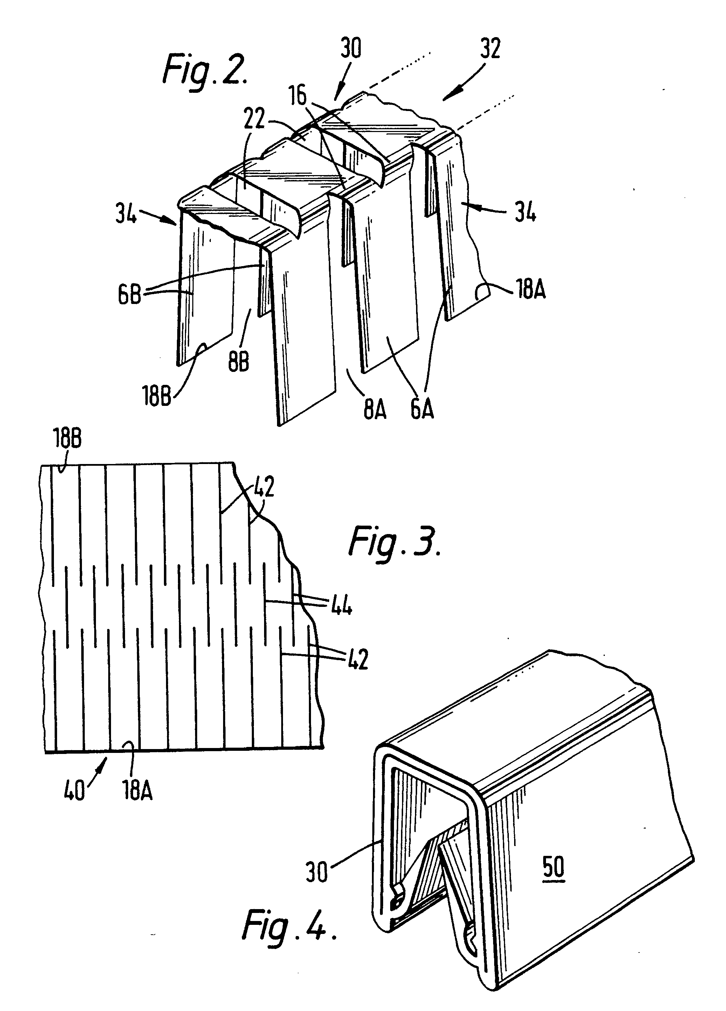

In Figure 2, the carrier blank of Figure 1 has been bent into a channel shaped core 30 having a base 32 and two side walls 34. The spaces 22 of the spine 10 extend across substantially the whole width of the base 32 of the channel 30. The spaces 8A, 8B of the first and third regions 2, 4 extend from the lateral edges 18A, 18B of the strip to the intersection between the base 32 and side walls 34 of the channel. Accordingly, the connecting links 16 are disposed approximately at the junction of the second region 4 with the first or third region 4, 12. This is not, however, presently envisaged to be an essential features of the invention. In some embodiments, the connecting units 16 may appear toward the top of the side walls 34 of the channel 30.

With reference to Figure 3, a portion of a metal blank 40 is shown before stretching to form a core blank 2 as shown in Figure 1. The blank 40 is provided with cuts including two first sets of regular cuts 42 extending normally from each lateral edge 18A, 18B of the strip. Each first cut 42 from one lateral edge 18A of the metal strip is co-linear with a cut 42 from the other lateral edge 18B of the strip. The cuts 42 terminate toward the outer part of the central region 10 of the strip which is to become the spine of the channel. The precise position at which the first cuts 42 terminate is determined by the profile of channel-shaped carrier required. Substantially evenly or equally spaced between adjacent first cuts 42, and parallel to the first cuts 42, are second cuts 44 which extend across the central region 10 of the metal strip and which overlap the cuts 42 The second cuts 44 are equally spaced between the first cuts 42 such that, on stretching of the metal strip, a core blank of the configuration shown in Figure 1 is produced.

In Figure 4, a strip structure bearing a carrier strip according to the present invention is shown. The elongate channel shaped core 30 is covered by a flexible resilient material, preferably a flexible plastic 50. The plastic keys through the slots or spaces in the core to provide a resilient, flexible strip structure.

## Claims

1. An elongate, laminar blank (2) intended to be formed into an elongate channel-shaped core for a strip structure comprising a central spine region (10) extending along the length of the blank and, to each side of the central region, a side region (4 and 12) comprising a regular series of alternate legs (6A or 6B) extending generally perpendicularly to the length of the blank in a direction outwardly from the central region (10) to a lateral edge (18A or 18B) of the blank and each leg (6A or 6B) on one of said sides (4 or 12) being aligned across the width of the blank with a leg (6A or 6B) on the other of said sides (12 or 4) to form a pair of aligned legs (6A and 6B); each slot (8A or 8B) extending from a respective apex (20A or 20B) in the central region (10) outwardly to its respective lateral edge (18A or 18B) and each slot (8A or 8B) on one of said sides (4 or 12) being aligned across the width of the blank with a slot (8B or 8A) on the other of said sides (12 or 4) to form a pair of aligned slots (8A and 8B); and the central region (10) being provided with a plurality of evenly spaced apertures (22) each of which extends in the direction generally perpendicular to the length of the blank and is aligned across the width of the blank with the centreline of a pair of aligned legs (6A and 6B); characterised in that the length (y), when measured in a direction generally perpendicular to the length of the blank, of each aperture is no greater than 50% of the total width (z) of the blank and in that the ratio of the length (y) of each aperture (22) to the distance (x) between respective apices (20A and 20B) of an aligned pair of slots (8A and 8B) adjacent to the aperture (22) is in the range of from 1.5:1 to 6:1.

2. A blank according to Claim 1 formed from a metal.

3. A blank according to Claim 2 formed from a steel.

4. A blank according to any preceding claim, wherein the length (y) of each aperture is in the range of from 20% to 40% of the total width (z) of the blank, preferably about 30% of the total width of the blank.

5. A blank according to any preceding claim, wherein the ratio of the length (y) of each aperture (22) to the distance (x) between respective apices (20A, 20B) of an aligned pair of slots (8A and 8B) adjacent to the aperture (22) is in the range of from 2:1 to 4:1, preferably 3:1.

6. An elongate channel-shaped core formed from an elongate blank as claimed in any one of Claims 1 to 5, wherein the apertures along the intermediate region of the strip extend substantially across the base of the channel with the legs forming the sides of the channel.

7. A method of producing an elongate blank, which method comprises forming, in an elongate metal strip of substantially constant width, a first series of regular, spaced-apart cuts extending normally from each lateral edge of the metal strip, each terminating in an apex outwardly within an intermediate region of the strip, each cut from one lateral edge of the metal strip being co-linear with a cut from the other lateral edge of the strip; forming a second series of cuts, parallel to the first series of cuts, and spaced equally or substantially equally between cuts of the first series of cuts, said second series of cuts extending across the intermediate region of the strip and terminating short of the lateral edges of the strip but overlapping adjacent cuts of the first series of cuts; and longitudinally stretching the strip so as to open the cuts thereby to form an elongate carrier blank; characterised in that the length, when measured in a direction generally perpendicular to the length of the blank, of each of the second cuts is no greater than 50% of the length of the blank and in that the ratio of the length of each of the second cuts to the distance between the apices of an adjacent aligned pair of first cuts is in the range of from 1.5:1 to 6:1.

8. A method of producing an elongate blank in accordance with any one of Claims 1 to 5, wherein the elongate blank is punched from an elongate metal strip of substantially constant width.

9. A flexible channel-shaped strip structure incorporating a channel-shaped core as claimed in Claim 6.

10. A method of making a strip structure incorporating a channel-shaped carrier, which method comprises forming an elongate carrier blank by a method according to Claim 7 or 8; covering the channel-shaped carrier with a flexible resilient material to enclose the carrier; and, before or after the carrier is covered, forming the carrier blank into a channel shape.

11. A method according to Claim 10, wherein the flexible resilient material is a plastics material or a rubber material and the strip structure is preferably formed by extrusion.

## Revendications

1. Ebauche (2) laminée, allongée, destinée à être formée en une âme en forme de canal allongé pour une structure de bande comprenant une région centrale (10) en pointe qui s'étend le long de l'ébauche et, de chaque côté de la région centrale, une région latérale (4 et 12) comprenant une série régulière de jambes (6A et 6B) et de fentes (8A et 8B) alternées ; chaque jambe (6A ou 6B) s'étendant de façon généralement perpendiculaire à la longueur de l'ébauche dans une direction dirigée vers l'extérieur depuis la région centrale (10) jusqu'à un bord latéral (18A ou 18B) de l'ébauche et chaque jambe (6A ou 6B) sur l'un desdits côtés (4 ou 12) étant alignée en travers de la largeur de l'ébauche avec une jambe (6A ou 6B) sur l'autre desdits côtés (12 ou 4) pour former une paire de jambes alignées (6A et 6B) ; chaque fente (8A ou 8B) s'étendant depuis un apex respectif (20A ou 20B) dans la région centrale (10) vers l'extérieur jusqu'à son bord latéral respectif (18A ou 18B) et chaque fente (8A ou 8B) sur l'un desdits côtés (4 ou 12) étant alignée en travers de la largeur de l'ébauche avec une fente (8B ou 8A) sur l'autre desdits côtés (12 ou 4) pour former une paire de fentes alignées (8A et 8B) : et la région centrale (10) étant munie d'une pluralité d'ouvertures (22) espacées de façon égale, chacune d'elles s'étendant dans une direction généralement perpendiculaire à la longueur de l'ébauche et étant alignée en travers de la largeur de l'ébauche avec l'axe d'une paire de jambes alignées (6A et 6B) ; caractérisée en ce que la longueur (y), si elle est mesurée dans une direction généralement perpendiculaire à la longueur de l'ébauche, de chaque ouverture, n'est pas supérieure à 50% de la largeur totale (z) de l'ébauche et en ce que le rapport de la longueur (y) de chaque ouverture (22) à la distance (x) entre les apex respectifs (20A et 20B) d'une paire alignée de fentes (8A et 8B) adjacentes à l'ouverture (22) est compris entre 1,5:1 et 6:1.

2. Ebauche selon la revendication 1, formée à partir de métal.

3. Ebauche selon la revendication 2, formée à partir d'acier.

4. Ebauche selon l'une quelconque des précédentes revendications, dans laquelle la longueur (y) de chaque ouverture est de l'ordre de 20% à 40% de la largeur totale (z) de l'ébauche, de préférence de 30% environ de la largeur totale de l'ébauche.

5. Ebauche selon l'une quelconque des précédentes revendications, dans laquelle le rapport de la longueur (y) de chaque ouverture (22) à la distance (x) entre les apex respectifs (20A, 20B) d'une paire alignée de fentes (8A et 8B) adjacentes à l'ouverture (22) est de l'ordre de 2:1 à 4:1, de préférence de 3:1.

6. Ame en forme de canal allongé formée à partir d'une ébauche allongée selon l'une quelconque des revendications 1 à 5, dans laquelle les ouvertures le long de la région intermédiaire de la bande s'étendent sensiblement en travers de la base du canal avec les jambes formant les côtés du canal.

7. Procédé de fabrication d'une ébauche allongée, ce procédé comprenant la formation, dans une bande de métal allongée de largeur sensiblement constante, d'une première série de découpures régulières, espacées, s'étendant perpendiculairement depuis chaque bord latéral de la bande de métal, chacune se terminant dans un apex dirigé vers l'extérieur à l'intérieur d'une région intermédiaire de la bande, chaque découpure depuis un bord latéral de la bande de métal étant colinéaire avec une découpure depuis l'autre bord latéral de la bande ; la formation d'une seconde série de découpures, parallèles à la première série de découpures, et espacées de façon égale ou sensiblement égale entre les découpures de la première série de découpures, ladite seconde série de découpures s'étendant en travers de la région intermédiaire de la bande et se terminant en deçà des bords latéraux de la bande mais chevauchant des découpures adjacentes de la première série de découpures ; et l'étirage longitudinal de la bande de manière à ouvrir les découpures, ce qui forme une ébauche de support allongée ; caractérisé en ce que la longueur, si elle est mesurée dans une direction généralement perpendiculaire à la longueur de l'ébauche, de chacune des secondes découpures, n'est pas supérieure à 50% de la longueur de l'ébauche et en ce que le rapport de la longueur de chacune des secondes découpures à la distance entre les apex d'une paire alignée adjacente de premières découpures est compris entre 1,5:1 et 6:1.

8. Procédé de fabrication d'une ébauche allongée selon l'une quelconque des revendications 1 à 5, dans lequel l'ébauche allongée est découpée à partir d'une bande de métal allongée de largeur sensiblement constante.

9. Structure de bande flexible en forme de canal incorporant une âme en forme de canal selon la revendication 6.

10. Procédé de fabrication d'une structure de bande incorporant un renfort en forme de canal, ce procédé comprenant la formation d'une ébauche de support allongée par un procédé selon la revendication 7 ou 8 ; le revêtement du support en forme de canal avec un matériau flexible élastique pour entourer le support ; et, avant ou après que le support soit revêtu, la formation de l'ébauche de support en une forme de canal.

11. Procédé selon la revendication 10, dans lequel le matériau flexible élastique est une matière plastique ou du caoutchouc et la structure de bande est de préférence formée par extrusion.

**Patentansprüche**

1. länglicher, laminarer Zuschnitt (2), der zu einem länglichen kanalförmigen Kern für ein Streifengebilde geformt werden soll, mit einem sich über die Länge des Zuschnitts erstreckenden mittigen Rückenbereich (10) und, auf jeder Seite des mittigen Bereichs, einem Seitenbereich (4 und 12), der eine regelmäßige Folge von sich abwechselnden Beinen (6A und 6B) und Schlitzen (8A und 8B) aufweist, wobei sich jedes Bein (6A oder 6B) im wesentlichen senkrecht zu der Längsrichtung des Zuschnitts von dem mittigen Bereich (10) nach außen zu einem seitlichen Rand (18A oder 18B) des Zuschnitts erstreckt und jedes Bein (6A oder 6B) an einer der Seiten (4 oder 12) über die Breite des Zuschnitts zu einem Bein (6A oder 6B) auf der anderen dieser Seiten (12 oder 4) ausgerichtet ist und somit ein Paar ausgerichteter Beine (6A und 6B) bildet, wobei jeder Schlitz (8A oder 8B) sich von einer jeweiligen Spitze (20A oder 20B) in dem mittigen Bereich (10) nach außen zu dem jeweiligen seitlichen Rand (18A oder 18B) erstreckt und jeder Schlitz (8A oder 8B) an einer der Seiten (4 oder 12) über die Breite des Zuschnitts zu einem Schlitz (8B oder 8A) an der anderen der Seiten (12 oder 4) ausgerichtet ist und somit ein Paar ausgerichteter Schlitze (8A und SB) bildet, und wobei der mittige Bereich (10) eine Vielzahl von in gleichmäßigem Abstand angeordneter Öffnungen (22) aufweist, von welchen sich jede im wesentlichen senkrecht zur Längsrichtung des Zuschnitts erstreckt und über die Breite des Zuschnitts zu der Mittellinie eines Paars zueinander ausgerichteter Beine (6A und 6B) ausgerichtet ist; dadurch gekennzeichnet, daß die im wesentlichen senkrecht zur Längsrichtung des Zuschnitts gemessene Länge (y) jeder Öffnung nicht größer ist als 50 % der gesamten Breite (z) des Zuschnitts und daß das Verhältnis der Länge (y) jeder Öffnung (22) zur Entfernung (x) zwischen jeweiligen Spitzen (20A und 20B) eines zueinander ausgerichteten Paares von Schlitzen (8A und 8B), die der Öffnung (22) benachbart liegen, im Bereich von 1,5 : 1 bis 6 : 1 liegt.

2. Zuschnitt nach Anspruch 1, der aus Metall gebildet ist.

3. Zuschnitt nach Anspruch 1 und 2, der aus Stahl gebildet ist.

4. Zuschnitt nach einem der vorhergehenden Ansprüche, wobei die Länge (y) jeder Öffnung im Bereich von 20 % bis 40 %, vorzugsweise bei ungefähr 30 %, der gesamten Breite (z) des Zuschnitts liegt.

5. Zuschnitt nach einem der vorhergehenden Ansprüche, wobei das Verhältnis der Länge (y) jeder Öffnung (22) zu der Entfernung (x) zwischen den jeweiligen Spitzen (20A, 20B) eines zueinander ausgerichteten Paares von Schlitzen (8A und 8B) benachbart der Öffnung (22) im Bereich von 2 : 1 bis 4 : 1, vorzugsweise bei 3 : 1, liegt.

6. Länglicher kanalförmiger Kern, der aus einem länglichen Zuschnitt nach einem der Ansprüche 1 bis 5 geformt ist, wobei die Öffnungen entlang dem mittleren Bereich des Streifens sich im wesentlichen über die Basis des Kanals erstrecken, wobei die Beine die Seiten des Kanals bilden.

7. Verfahren zur Herstellung eines länglichen Zuschnitts, bei welchem in einem länglichen Metallstreifen von im wesentlichen konstanter Breite eine erste Reihe von regelmäßigen, im Abstand liegenden Schnitten, die senkrecht von jedem seitlichen Rand des Metallstreifens ausgehen und jeweils in einer Spitze außen in einem mittleren Bereich des Streifens auslaufen, gebildet wird, wobei jeder Schnitt von einem seitlichen Rand des Metallstreifens aus kolinear mit einem Schnitt von dem anderen seitlichen Rand des Streifens ist; bei welchem eine zweite Reihe von Schnitten gebildet wird; die parallel zu der ersten Reihe von Schnitten verlaufen und in gleichmäßigem oder im wesentlichen gleichmäßigem Abstand zwischen Schnitten der ersten Reihe von Schnitten angeordnet sind, wobei die zweite Reihe von Schnitten sich über den mittleren Bereich des Streifens erstreckt und kurz vor den seitlichen Rändern des Streifens endet aber benachbarte Schnitte der ersten Reihe von Schnitten überlappt; und bei welchem der Streifen in Längsrichtung so gedehnt wird, daß dadurch die Schnitte geöffnet werden und einen länglichen Trägerzuschnitt bilden, dadurch gekennzeichnet, daß die in einer Richtung im wesentlichen senkrecht zur Länge des Zuschnitts gemessene Länge jedes dieser zweiten Schnitte, nicht größer als 50 % der Länge des Zuschnitts ist und daß das Verhältnis der Länge jedes der zweiten Schnitte zum Abstand zwischen den Spitzen eines benachbarten, zueinander ausgerichteten Paares von ersten Schnitten im Bereich von 1,5 : 1 zu 6 : 1 liegt.

8. Verfahren zur Herstellung eines länglichen Zuschnitts nach einem der Ansprüche 1 bis 5, wobei der längliche Zuschnitt aus einem länglichen Metallstreifen von im wesentlichen konstanter Breite ausgestanzt wird.

9. Flexibles kanalförmiges Streifengebilde mit einem kanalförmigen Kern nach Anspruch 6.

10. Verfahren zur Herstellung eines Streifengebildes mit einem kanalförmigen Träger, wobei ein länglicher Trägerzuschnitt gemäß einem Verfahren nach Anspruch 7 oder 8 gebildet wird, wobei der kanalförmige Träger mit einem flexibel nachgiebigen Material bedeckt wird, um den Träger zu umhüllen; und wobei, vor oder nach der Umhüllung des Trägers, der Trägerzuschnitt zu einem Kanal geformt wird.

11. Verfahren nach Anspruch 10, wobei das flexibel nachgiebige Material ein Kunststoffmaterial oder Gummimaterial ist und das Streifengebilde vorzugsweise durch Extrusion geformt wird.

Fig.1.

EP 0 252 659 B1

Fig.2.

Fig.3.

Fig.4.